# EUROPEAN PATENT SPECIFICATION

(11) **EP 0 364 106 B1**
(45) Date of publication and mention of the grant of the patent: **15.11.1995**
(21) Application number: 89309313.8
(22) Date of filing: 13.09.1989
(51) Int. Cl.: F02C 6/16, F02C 6/18, F02C 1/05

(54) **Method of and apparatus for producing power using compressed air**
Verfahren und Vorrichtung zur Stromerzeugung mittels Druckluft
Méthode et dispositif pour la production d'électricité employant de l'air comprimé

(30) Priority: 19.09.1988 US 246149; 09.11.1988 IL 88334
(43) Date of publication of application: 18.04.1990
(73) Proprietor: ORMAT, INC., Sparks, NV 89437 (US)
(72) Inventor: Bronicki, Lucien Y., Yavne 07650 (IL)
(74) Representative: Godwin, Edgar James

(56) References cited:
- WO-A-81/02443
- FR-A- 2 125 680
- GB-A- 2 006 878
- NL-A- 7 614 124
- US-A- 4 403 601
- BROWN BOVERI REVIEW, vol. 67, no. 12, December 1980, pages 723-733, Baden, CH ; P. ZAUGG : "Air-storage power plants with special consideration of USA conditions".
- COMPRESSED AIR, vol. 83, no. 7, July 1978, Philipsburg, US ; "Compressed air storage - A peak-shaving concept for electrical utilities".

## Description

### TECHNICAL FIELD

This invention relates to producing power using compressed air and more particularly is concerned with a method of and apparatus for producing power from compressed air using solar energy and a gas turbine.

### BACKGROUND OF THE INVENTION

In recent years, domestic, commercial and industrial power consumption in many countries, particularly during the hours of peak power consumption, has been growing at a seemingly ever increasing rate. Because electric power utility companies are obligated to furnish power at levels sufficient to meet any customer requirement even if such levels occur infrequently or for only a few hours a day, the generating power capacity of the electric utility companies must be larger than the average power level requirements in order to provide the incremental power needed for periods of peak demand. Normally, and particularly in many countries in the summer time, peak power consumption occurs during several hours in the daytime, consumption levels falling to their so-called "off peak" levels during the night.

Electric utility companies conventionally operate generating plants having minimal costs and reasonably low operating costs, for example coal burning plants, to supply the base load and intermediate load of customers connected to the electric grid. Because peak power demands on electric utility companies occur only for relatively short periods of time, more expensive operating plants, such as gas turbines, which can be brought onto line quickly to furnish power are used during the short periods of peak demand. Consequently, the cost of peak power is normally several times larger than the cost of what is called baseload or "off-peak" power.

Recently, a system has been developed for providing peak power using a gas turbine wherein air necessary for the operation of the gas turbine is stored in underground caverns. (see Brown Boveri Review, vol. 67, No. 12, December 1980, pages 723- 733, Baden, CH). At night, when relatively inexpensive power is available, an electrically driven air compressor is operated for compressing the air. During the day, when peak power is required, the compressed air is released from the caverns to the gas turbine for producing power via a coupled generator. In such a system, expensive caverns conventionally constructed underground are required to store the compressed gas.

It is therefore an object of the present invention to provide a new and improved method of and apparatus for producing electrical power during periods of peak power demand wherein the disadvantages as outlined including and related to the relatively large costs are reduced or substantially overcome.

The present invention provides a method for producing power by compressing gas from an ambient source during a first period of time, storing the compressed gas in a storage reservoir, and supplying the compressed gas from the storage reservoir to a gas turbine during a second period of time to produce electric power, characterised in that the gas is passed through a solar collector before it is supplied to the turbine, the solar collector having a moving surface that is exposed alternately, on the one hand, to solar radiation whereby the said surface is heated and, on the other hand, to the said gas which flows over the said surface and absorbs heat therefrom.

The first period of time may coincide with periods of off-peak demand for electricity, such as at night. In such case, the said second period of time is during the day.

The invention also provides apparatus for producing power using compressed gas and a gas turbine for driving an electric generator, comprising compressor means for compressing gas during a first period of time; a storage reservoir for storing gas compressed by said compressor means; and means for supplying compressed gas to the gas turbine during a second period of time to produce power, and heating means for heating the gas supplied to the said turbine, characterised in that the said heating means comprises a solar collector interposed between the storage reservoir and the turbine, the solar collector having a surface which is movable so that it is exposed alternately, on the one hand, to solar radiation whereby the said surface is heated and, on the other hand, to the said gas which flows over the said surface and absorbs heat therefrom.

The compressed gas supplied to the gas turbine may be additionally heated in a combustion chamber wherein fuel is burned. The solar collector may comprise a receiver positioned at the top of a tower for receiving the compressed gas, and tracking reflectors for focusing solar radiation on the receiver and heating the gas therein. The solar radiation receiver may comprise a rotatable ceramic member for transferring heat from solar radiation to the gas.

A sensing/control unit may be provided which is responsive to the temperature of the gas exiting the solar receiver for effecting operation of the combustion chamber when the temperature of the gas falls below a predetermined value.

Existing caverns, such as artificial salt caverns and underground aquifers can be used as storage reservoirs for storing the compressed gas. Underground caverns located in geological fields where oil wells exist, also can be used as storage reservoirs with existing oil wells and reservoirs such as dry and old ones etc., i.e., also the drilling itself reaching the reservoirs being preferably utilized in the present invention. By utilizing existing dry oil wells as the subsystem used in storing the compressed air necessary in operation of the gas turbine, in accordance with the present invention, considerable savings in construction costs are made, with the use of available solar energy to heat the compressed gas supplied to the gas turbine further cutting costs wherein the gas used in the gas turbine is compressed during period of relatively cheap off-peak electricity.

In the present invention, an electric motor is used to operate the compressors and the motor can be coupled, selectively, to the turbine and operates as an electric generator. In a preferred embodiment, the compressor is a multi-stage compressor and the gas turbine is a multi-stage turbine. Furthermore, heat generated during the compression of the gas and contained therein is transferred to another fluid in a heat exchanger which can be part of a waste heat converter for producing electrical power, the waste heat converter, preferably being an organic-fluid Rankine cycle power plant.

### BRIEF DESCRIPTION OF THE DRAWINGS

Embodiments of the invention are described below by way of example, and with reference to the accompanying drawings wherein:
Fig. 1 is a block diagram of apparatus for producing power (not in accordance with the present invention);
Fig. 1A shows a schematic diagram of the preferred embodiment of a combustion chamber;
Fig. 2 is a block diagram of another one embodiment of apparatus for producing power in accordance with the present invention;
Figs. 2A and 2B show modifications of certain components of the apparatus shown in Fig. 2;
Fig. 3 shows a schematic diagram of a further embodiment of the present invention; and
Fig. 4 shows a schematic diagram of the preferred embodiment of solar collector of the present invention.

### DETAILED DESCRIPTION

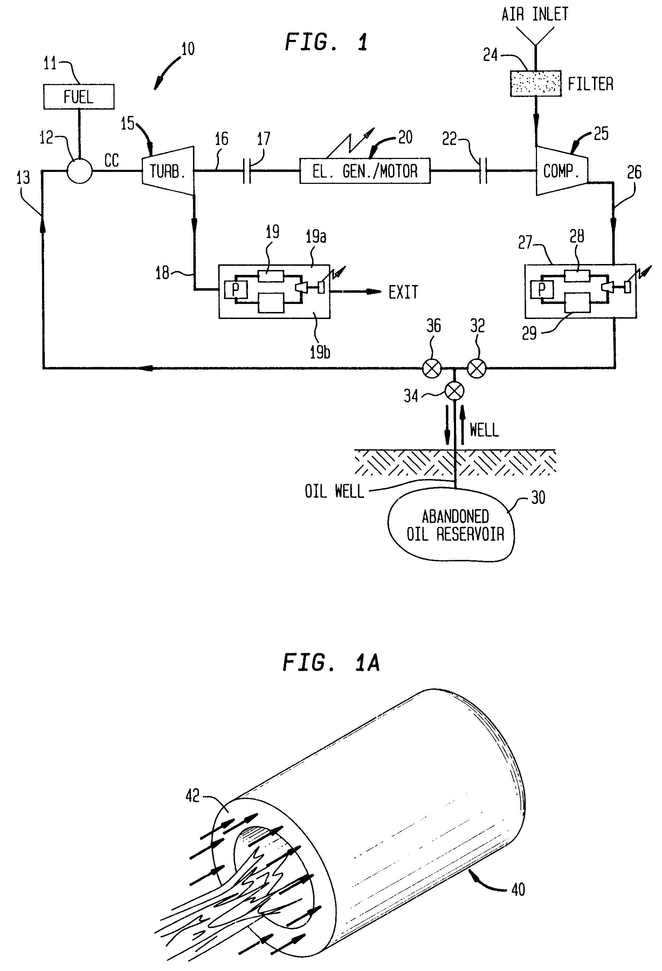

Referring to Fig. 1 of the drawings, reference numeral 10 designates apparatus for producing power. Fuel tank 11 supplies fuel to combustion chamber 12, wherein compressed air from underground storage reservoir 30 is heated before entering gas turbine 15. The air stored in underground storage reservoir 30 is compressed during operation of compressor 25. The preferred form of the combustion chamber is shown in Fig. 1A as external combustion chamber 40 wherein low grade fuel is burned to heat the compressed air flowing in annulus 42.

Existing caverns, such as artificial salt caverns and underground aquifers can be used as storage reservoirs for storing compressed air. Also, underground caverns located in geological fields where oil wells exist are suitable for use as storage reservoirs. Preferably, existing oil wells such as dry, old or abandoned ones, etc., are utilized, wherein an oil reservoir connected to the oil well serves as the underground storage cavern for the compressed air with the well itself providing valuable access to the reservoir. In many cases, several oil wells may be connected to a single reservoir, and consequently, the blocking off of all except one well may be required in order to make the oil well and reservoir suitable for use. Consequently, when such oil wells and reservoirs are used, construction costs are considerably cut.

When gas turbine 15 is in operation, it is coupled by clutch 17 to electric generator/motor 20 operating as an electric generator for producing electric power which is supplied to an electric grid (not shown). In this case, clutch 22 decouples generator/motor 20 from compressor 15. Optionally, a separate electric generator can be used, eliminating the need for clutches 17 and 22.

Exhaust 18 is provided for exhausting gases exiting turbine 15. Heat exchanger 28 may be provided to cool the air compressed by compressor 25 when generator/motor 20 is decoupled by clutch 17 from the gas turbine and operates as a motor coupled to the compressor by clutch 22. However, in an optional embodiment, heat exchanger 28 may be the vaporizer of waste heat converter 27, preferably comprising organic-fluid Rankine cycle (ORC) power plant 29. The vaporizer receives heat present in air compressed by compressor 25, with the waste heat converter produces electrical power during operation of compressor 25. Optionally, a heat exchanger 19 can be provided and connected to exhaust 18 for extracting heat from the gases exhausted from the gas turbine. This heat exchanger may also be part of waste heat converter 19a, preferably comprising organic-fluid Rankine cycle (ORC) power plant 19b, which receives heat contained in the exhaust gases exiting turbine 15. Thus, the heat converter would produce electrical power during operation of the turbine.

When compressor 25 is operating, it is coupled by clutch 22 to electric generator/motor 20 which operates as a motor. Ambient air enters filter 24, is compressed by the compressor, and then stored in reservoir 30 when valves 32 and 34 are open and valve 36 is closed. Preferably, the air is compressed to a pressure of between 30 to 50 bar, such pressure being preferably maintained in the air storage reservoir. The compressor is operated during periods of off-peak demand for electricity in order to take advantage of the relatively inexpensive cost of electricity during such periods of time. Normally, such periods of time occur during the night and consequently electric generator/motor 20, acting as an electric motor running compressor 25, is made available at night.

Heat generated during compression of the air by compressor 25 is received by heat exchanger 28 and is preferably used to produce electric power via power plant 29. During the day, compressed air stored in storage reservoir 30 is released from the reservoir by opening valves 34 and 36, and closing valve 32. The released air flows toward turbine 15 through combustion chamber 12 where fuel supplied from fuel tank 11 heats the compressed air, normally to more than several hundred degrees centigrade. Expansion of the heated gases in turbine 15 causes the turbine to rotate output shaft 16 and drive electric generator/motor 20, now acting as an electric generator, which is coupled to the shaft via clutch 17. The electric power thus produced is supplied to an electric grid. During this mode of operation of electric generator/motor 20, clutch 22 disconnects the motor/generator from compressor 20.

Heat contained in the air or gases exiting gas turbine 15 via exhaust 18 is available for use by a heat exchanger which preferably may be part of a waste heat converter to produce electric power. Subsequently, the expended gas exits into the ambient atmosphere. Thus, electric power is produced during periods of peak power utilizing apparatus operating basically on a Brayton cycle, the compressed air used to run the gas turbine being compressed and stored preferably in abandoned oil reservoirs connected to abandoned oil wells during periods of off-peak demand for electricity, thus taking advantage of the relatively inexpensive cost of electricity during such periods.

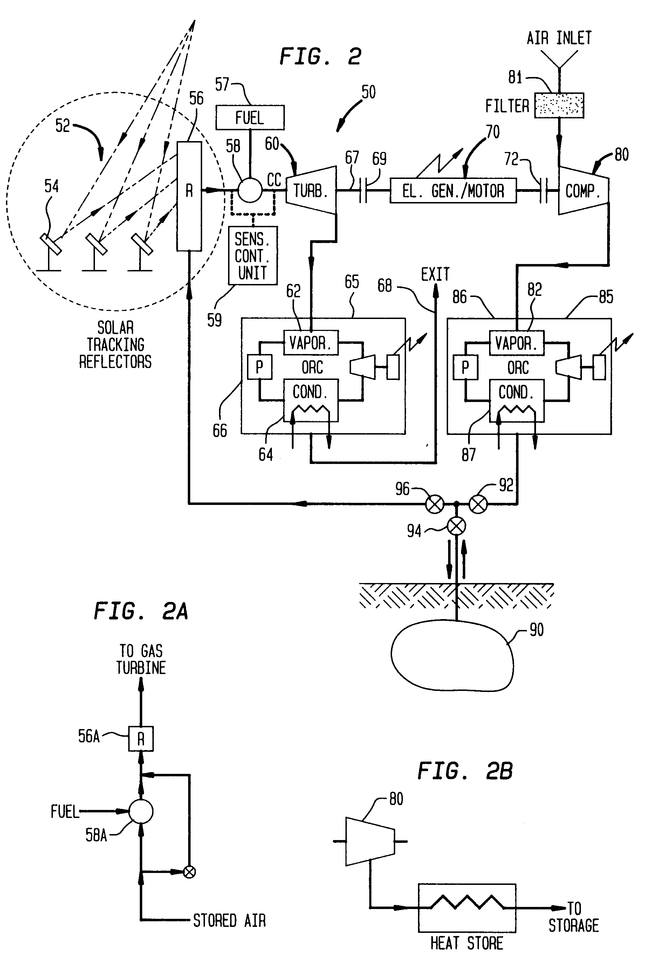

Turning to Fig. 2 of the drawings, reference numeral 50 designates apparatus for producing power in accordance with one embodiment of the present invention. Solar collector 52 comprises tracking reflectors 54, or heliostats, for focusing solar radiation on solar radiation receiver 56 which receives compressed air supplied from underground storage reservoir 90. After being heated in receiver 56, the compressed air is supplied to gas turbine 60 which drives electric generator/motor 70 through clutch 69. In this mode, generator/motor 20 is decoupled by clutch 22 from compressor 80 and operates as an electric generator for producing electric power supplied to an electric grid (not shown). If preferred, however, a separate electric generator can be used.

Mirror reflectors can serve as tracking reflectors, and receiver 56 is normally positioned at the top of a tower. As in the previously described apparatus shown in Fig. 1, existing caverns, such as artificial salt caverns and underground aquifers, can be used as storage reservoirs for storing compressed air. Also, quite often underground caverns located in geological fields where oil wells exist are suitable for use as storage reservoirs and many times existing oil wells, such as dry, old or abandoned ones etc., can also be utilized in the present invention, the oil reservoir connected to the oil well being used as the storage cavern.

Heat exchanger 62 contained in waste heat converter 65 receives heat present in air exhausted from turbine 60. Waste heat converter 65 produces electrical power from heat contained in the gases exhausted from gas turbine 60 in a manner similar to that described in the apparatus shown in Fig. 1. Preferably, waste heat converter 65 comprises organic-fluid Rankine cycle (ORC) power plant 66 containing vaporizer heat exchanger 62 and condenser 64 cooled by cooling water. Heat received in heat exchanger 62 vaporizes the working fluid of the power plant, the vaporized working fluid being furnished to a turbine for producing electric power. Subsequently, the expended air exits via exhaust conduit 68.

Combustion chamber 58, run on fuel supplied from fuel supply 57 and located between receiver 56 and turbine 60, is provided for maintaining a preselected temperature of the air entering the gas turbine. Preferably, the operation of combustion chamber 58 is controlled by sensing/control unit 59 which senses the temperature of the air exiting receiver 56. When the temperature of the air exiting solar receiver 56 is sufficient, the air can flow directly to turbine 60 via suitable conduits, bypassing the combustion chamber. When unit 59 senses that the air exiting receiver 56 is below a preselected value, unit 59 directs the air, by way of suitably arranged valves and piping, into the combustion chamber and initiates operation of the combustion chamber by causing fuel to be burned therein at a rate that maintains the temeprature of the air entering the gas turbine at its design value. Preferably, combustion chamber 58 is an external combustion chamber that uses low grade fuel to heat the air as shown in Fig. 1A. In order to ensure high combustion efficiency, the combustion chamber may be located before receiver 56 as shown in Fig. 2A.

When clutch 72 is activated, clutch 69 is deactivated, and generator/motor 70 is operated as a motor, compressor 80 is driven by the motor and compresses ambient air supplied through filter 81. If preferred, a separate electric motor can be used to drive the compressor. Similar to the previously described apparatus, heat present in the air compressed by compressor 80 is extracted by heat exchanger 82 contained in waste heat converter 85 which extracts heat present in air compressed by compressor 80. The heat extracted from the compressed air by the waste heat converter during the operation of the compressor is utilized by the converter to generate electricity. Preferably, waste heat converter 85 comprises organic-fluid Rankine cycle (ORC) power plant 86 containing vaporizer heat exchanger 82, and condenser 84 cooled by cooling water. The heat received by heat exchanger 82 vaporizes the working fluid of the power plant, and the resultant vapors are supplied to a turbine in the power plant which drives a generator for producing electrical power. The expended vapors from the turbine are condensed by condenser 87 and returned to vaporizer 82. Alternatively, the heat extracted from the compressed air can be stored in a heat store for use at a later time as indicated in Fig. 2B. Examples of suitable heat stores are: a water reservoir, and the heat storage layer of a salt water solar pond.

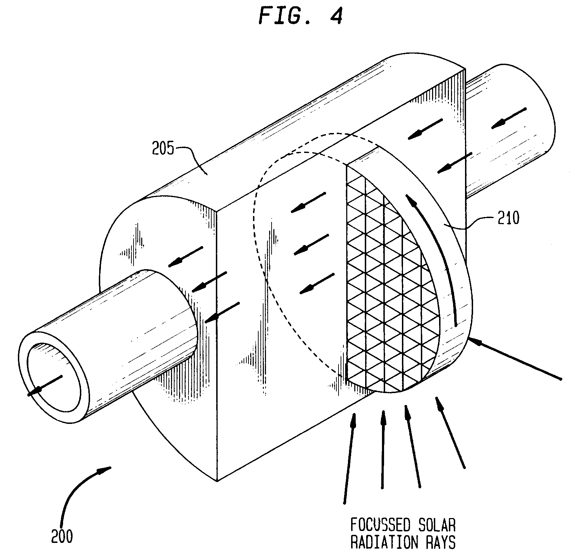

The preferred form of the solar receiver 56 is shown in Fig. 4 as receiver 200 which comprises sealed container 205 within which the compressed air flows in an axial direction, and member 210 rotatable relative to the container. A portion of member 210 extends external to the sealed container, and is located at the focus of the tracking reflectors for receiving the focused solar radiation. Rotation of member 210 moves the heated portion of member 210 internal to the sealed container where heat stored in such portion is transferred to the compressed air in the container. Thus, rotation of member 210 alternately subjects the member to focused heat, which is absorbed by the member, and to the flowing compressed air to which heat from the member is transferred.

In the preferred construction of member 210, ceramic material is used and the member has a matrix form. Also, the seals by which the rotatable member is sealed during its rotation are preferably cooled by gas or air this flow.

In operation of the embodiment of Fig. 2, compressor 80, driven by electric generator/motor 70 operated as a motor and coupled by clutch 72 to the compressor, compresses air supplied through filter 41. The compressed air is stored in reservoir 90 when valves 92 and 94 are open and valve 96 is closed. Preferably, the air is compressed to a pressure of between 30 to 50 bar; and such a pressure is also maintained in the air storage reservoir.

The compressor is operated during periods of off-peak demand for electricity in order to take advantage of the relatively inexpensive cost of electricity during such periods of time. Normally, such periods of time occur during the night and consequently electric generator/motor 70 is made available for use, acting as an electric motor running compressor 80.

Heat generated during compression and present in the compressed air is received by heat exchanger 82 and used to produce electric power via power plant 86. Alternatively, such heat can be stored in a heat sink for use at a later time.

In power plant 86, the heated air passes through heat exchanger 82 vaporizing an organic-working fluid, such as Freon or the like, the vapors being supplied to a turbine contained in power plant 86 for driving a generator and producing electric power. Vapors exhausted from this turbine are condensed in condenser 87 which is cooled by cooling water. A feed pump returns the condensed organic-fluid to vaporizer heat exchanger 82.

During the day, the compressed air stored in storage reservoir 90 is made available by opening valves 94 and 96 and closing valve 92. The compressed air flows toward turbine 60 through solar radiation receiver 56 where focused solar radiation reaching receiver 56 from tracking reflectors 54 heats the compressed air normally to more than several hundred degrees centigrade. The air that exits receiver 56 may have a temperature as high as 800°C. However, higher temperatures can be obtained if required. Subsequently, the heated, compressed air may flow through combustion chamber 58 to gas turbine 60 where expansion takes place. Alternatively, the combustion chamber can be located upstream of the solar receiver. Regardless of the location of the combustion chamber relative to the solar receiver, only the air or gases currently being supplied to the turbine is heated by the burning fuel and solar radiation.

Expansion of the heated gases in turbine 60 causes the turbine to rotate shaft 67 driving electric generator/motor 70, now acting as an electric generator, and coupled thereto via clutch 69 producing electric power supplied to an electric grid. During this mode of operation, clutch 72 disconnects electric generator/motor 70 from compressor 80.

The temperature of the air exiting solar receiver 56 may drop below a preselected value due to, for example, the presence of cloud cover that reduces the amount of focused radiation reaching the receiver. In such case, sensing/control unit 59 senses the temperature drop of the air and brings combustion chamber 58 into operation in order to heat the air to maintain its temperature entering turbine 60. Heat remaining in the air or gases exiting gas turbine 60 is received by heat exchanger 62 and used to produce electric power via power plant 66 in a manner similar to that which takes place in power plant 86 described above. Subsequently, the expended gas exits via conduit 68.

As described above, solar energy is utilized to produce electric power using a gas turbine. Compressed air used to run the gas turbine is compressed and stored during periods of off-peak demand for electricity, thus taking advantage of the relatively inexpensive cost of electricity during such periods. Furthermore, quite often the periods of time during which electric power is produced by the gas turbine will coincide with periods of peak electric power demand.

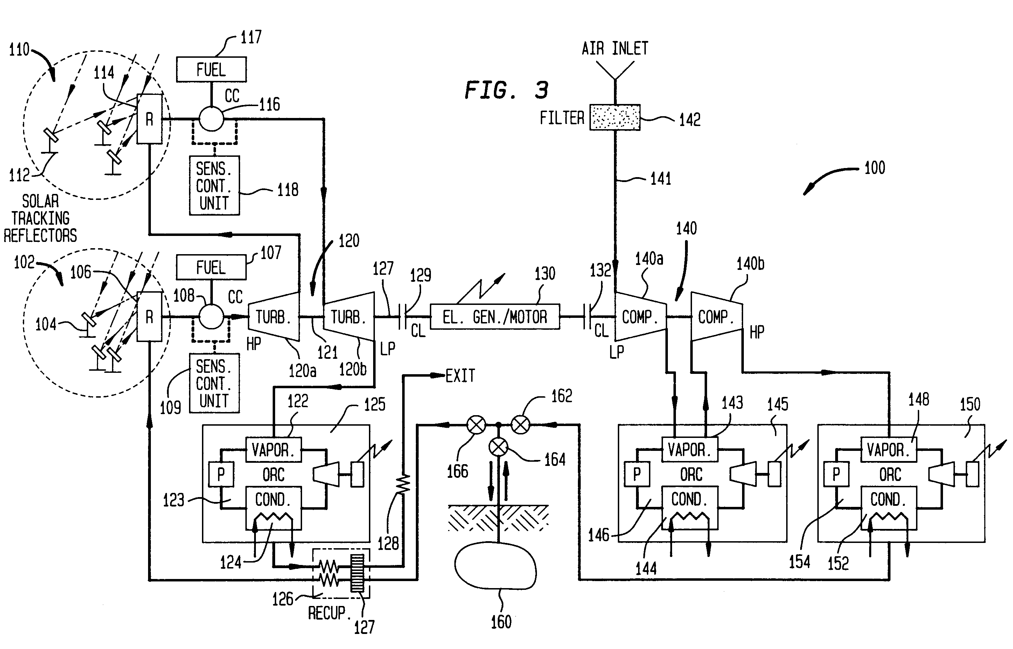

Referring now to Fig. 3, reference numeral 100 designates a further embodiment of the present invention for producing power from solar energy. This embodiment is similar to the embodiment shown in Fig. 2 except that gas turbine 120 and compressor 140 are multi-staged units. Second solar collector 110 and further waste heat converter 145 are provided between the stages of the turbine and compressor respectively in order to raise the efficiency of the power generating apparatus. Also, recuperator heat exchanger 126 is provided for additional heating of the compressed air supplied to gas turbine 120. While the gas turbine may have a generating capacity of 25 MW or greater, the present embodiment is also suitable for smaller generating capacities as well.

Solar collector 102 comprises tracking reflectors 104, or heliostats, for focusing solar radiation on solar radiation receiver 106 that receives the focused solar radiation. Collector 102 heats compressed air drawn from reservoir 160. The air in reservoir 160 had been compressed by compressor 140 during the previous night-time operation of multi-stage compressor 140. During the next day, compressed air from reservoir 160 is supplied to multi-stage gas turbine 120 which drives electric generator/motor 130, operating as an electric generator through activated clutch 129, clutch 132 being deactivated at this time. Generator/motor 130 thus produces electric power which is supplied to an electric grid (not shown). If preferred, however, a separate electric generator and motor can be used.

As in the embodiment of Fig. 2, mirror reflectors can be used as tracking reflectors and receiver 106 is normally positioned at the top of a tower. Combustion chamber 108, which may be located between receiver 106 and turbine 120, or upstream of the receiver, maintains the desired temperature level of air entering the the gas turbine. Fuel supplied from fuel supply 107 is burned in the combustion chamber, the supply of fuel being controlled by sensing/control unit 109.

In the present embodiment, multi-stage gas turbine 120 comprises high pressure stage turbine 120a and low pressure stage turbine 120b. Multi-stage compressor 140, which comprises low pressure stage compressor 140a and high pressure compressor 140b, is driven by electric generator/motor 130 when the latter operates as an electric motor. If preferred, however, a separate electric motor can be provided to drive compressor 140.

Solar collector 110 comprises tracking reflectors 112, or heliostats, for focusing solar radiation, and solar radiation receiver 114 for receiving focused solar radiation. Collector 110 provides interstage reheating of the air or gas exiting high pressure stage turbine 120a. The reheated air is supplied to combustion chamber 116, which is operated by sensing/control unit 118. When necessary, fuel from fuel tank 117 is supplied to chamber 116 to maintain the temperature of the gases or air entering low pressure stage turbine 120b. In this manner, the efficiency of gas turbine 120 is improved.

Mirror reflectors can be used as tracking reflectors and receiver 114 is normally positioned at the top of a tower. Air or gases exiting receiver 114 flow through combustion chamber 116 to low pressure stage gas turbine 120b. Alternatively, gases can flow directly to turbines 120a and 120b from solar receivers 106 and 114 via suitable conduits, bypassing combustion chambers 108 and 116 when the temperature of the air or gas is sufficient. Optionally, the gases can be diverted so as to also flow through the combustion chambers by suitable piping and valve arrangements when the combustion chambers are brought into operation. Combustion chambers 108 and 116 are preferably external combustion chambers burning low grade fuel as shown in Fig. 1A. Optionally, the chambers may be positioned upstream of receivers 106 and 114 instead of downstream to ensure high combustion efficiency.

Heat exchanger 122, which is part of waste heat converter 125, utilizes heat contained in air or gases exiting low pressure stage turbine 120b for producing electrical power. As shown in Fig. 3, waste heat converter 125 preferably is in the form of an organic-fluid Rankine cycle (ORC) power plant 123 which comprises heat exchanger 122 that functions as a vaporizer for vaporizing the working fluid of the power plant. The vaporized working fluid is supplied to a turbine contained in the power plant for producing electrical power. Expended vapors exiting the turbine are condensed in condenser 124 which is cooled by cooling water.

Recuperator heat exchanger 126 is provided for utilizing residual heat remaining in air or gases leaving power plant 123 to preheat the compressed air supplied from storage reservoir 160 to solar receiver 106. Preferably, recuperator 126 comprises rotatable ceramic member 127 that is alternately heated by the air or gases leaving power plant 123, and cooled by the compressed air or gases drawn from reservoir 160. In this manner, the air or gases delivered to receiver 106 is preheated by the exhaust gases as member 127 rotates. Exhaust conduit 128 provides an exit for the expended air or gases to the ambient atmosphere.

In the present embodiment, inter-stage heat exchanger 143, which is part of waste heat converter 145, preferably is in the form of organic-fluid Rankine cycle power plant 146. This power plant comprises heat exchanger 143, which functions as a vaporizer, supplying vaporized working fluid to a turbine that produces electrical power from heat contained in compressed air exhausting from low pressure stage compressor 140a. In addition, waste heat converter 150, which includes heat exchanger 148 for receiving heat present in compressed air exiting high pressure stage compressor 140b is provided for producing electric power therefrom. Waste heat converter 150 preferably comprises an organic-fluid Rankine cycle power plant 154.

Solar receivers 106 and 114 in the present embodiment, like receiver 56 in the embodiment of Fig. 2, may comprise a rotatable member, a portion of which is positioned external to a sealed container at the focus of the tracking reflectors and is heated by the focused solar radiation. Another portion of the member is positioned internal to the sealed container and transfers heat to the compressed air or gases flowing past this portion in the manner shown in Fig. 4. As before, the member is preferably constructed from ceramic material in a matrix form. Finally, the seals of the container are preferably cooled by gas or air flow.

When compressors 140a and 140b are driven by electric generator/motor 130 operating as a motor and clutch 132 is activated, the compressors compress the air to a pressure of between 30 to 50 bar before it is delivered to the reservoir. The compressed air is stored at similar pressure in reservoir 160 when valves 162 and 164 are open. In a manner similar to the previous embodiment, the compressors are operated during the periods of off-peak demand for electricity to take advantage of relatively inexpensive electricity during such periods of time. Normally, such periods of time occur during the night.

Heat generated during compression of the air by the compressors is received by heat exchangers 143 and 148 and is used to produce electric power using power plants 146 and 154 in a manner analogous to the manner of operation of power plants 66 and 86 contained in the previous embodiment shown in Fig. 2. During the day, stored compressed air is made available from storage reservoir 160 by opening valves 166 and 164, and closing valve 162. The compressed air flows into multi-stage turbine 120 through recuperator heat exchanger 126 and through solar radiation receiver 106 where focused solar radiation reaching receiver 106 from tracking reflectors 104 heats the compressed air. Normally, the air is heated to more than several hundred degrees centigrade, the gases reaching a temperature as high as 800 deg. C. If necessary, however, also in the present embodiment, higher temperatures can be used.

The heated compressed air flows from receiver 106 through combustion chamber 108 reaching high pressure stage turbine 120a where expansion takes place. Expanded gases exhausted from turbine 120a flow through receiver 114 and combustion chamber 116 where the gases are heated once again to relatively high temperatures of several hundred degrees. Subsequently, the heated gases are supplied to low pressure stage turbine 120b where expansion occurs once again. Expansion of the gases in turbines 120a and 120b cause the turbines to drive shaft 121 and shaft 127 respectively. These shafts are coupled by clutch 129 to electric generator/motor 130, now acting as an electric generator, which produces electric power. During this operation, clutch 132 is activated, and generator/motor 130 is disconnected from compressor 140. If the temperature of the air or gases exiting either solar receivers 106 and 114 drops below a preselected value, sensing/control units 109 and 118 sense the temperature drop and brings either one of the other or both of combustion chambers 108 and 116 into operation for maintaining the temperature of gases or air entering turbines 120a and 120b.

Gases exiting low pressure stage turbine 120b flow to heat exchanger 122 of organic-fluid Rankine Cycle power plan 123 where heat contained therein is used to vaporize the working fluid of this power plant, such as Freon etc., the vapors being supplied to the power plant turbine to produce electric power by driving a generator. Vapors exciting the power plant turbine are condensed in condenser 124 cooled by cooling water. A feed pump returns the condensed organic-fluid to heat exchanger 122. Further heat contained in gases or air exiting power plant 123 is used in recuperator 126 to heat compressed air flowing from air reservoir 160 to receiver 106. Expended gases are exhausted from apparatus 100 via exhaust conduit 128.

The advantages and improved results furnished by the method and apparatus of the present invention are apparent from the foregoing description of the embodiments of the invention.

## Claims

1. A method for producing power by compressing gas from an ambient source during a first period of time, storing the compressed gas in a storage reservoir (90 or 160), and supplying the compressed gas from the storage reservoir (90 or 160) to a gas turbine (60 or 120) during a second period of time to produce electric power, characterised in that the gas is passed through a solar collector (52 or 102) before it is supplied to the turbine (60 or 120), the solar collector having a moving surface that is exposed alternately, on the one hand, to solar radiation whereby the said surface is heated and, on the other hand, to the said gas which flows over the said surface and absorbs heat therefrom.

2. The method according to claim 1, characterised in that the compressed gas supplied to the gas turbine (60 or 120) is heated in a combustion chamber (58 or 108) wherein fuel is burned.

3. The method according to claim 1 or 2, characterised by cooling the compressed gas, prior to storing it, by transferring heat present in the compressed gas to another fluid in a heat exchanger (82 or 148).

4. The method according to claim 3 characterised by producing electric power using heat transferred to the other fluid in the heat exchanger (82 or 148), the heat exchanger being part of a waste heat converter (85 or 150).

5. The method according to claim 4 characterised in that the heat supplied to the other fluid vaporizes the fluid, the vapors being supplied to a turbine contained in the waste heat converter (85 or 150) to produce electric power, the waste heat converter being an organic-fluid Rankine cycle power plant (86 or 154).

6. The method according to any of claim 1 to 5 characterised in that the solar collector includes a receiver (56 or 106), positioned at the top of a tower, for receiving the compressed gas, and tracking reflectors (54 or 104) for focusing solar radiation on the receiver (56 or 106) for heating the gas therein.

7. The method according to any of claims 1 to 6 characterised by heating the gas prior to supplying it to the turbine (60 or 120) using a combustion chamber (58 or 108).

8. The method according to claim 7 characterised by commencing operation of the combustion chamber (58 or 108) in response to sensing a fall in temperature of the gas exiting the solar receiver (56 or 106) below a predetermined value.

9. The method according to any of claims 1 to 8 characterised by extracting work (at 66 or at 125) from gases exhausted from the turbine (60 or 120).

10. Apparatus for producing power using compressed gas and a gas turbine (60 or 120) for driving an electric generator (70 or 130), comprising compressor means (80 or 140) for compressing gas during a first period of time; a storage reservoir (90 or 160) for storing gas compressed by said compressor means (80 or 140); and means for supplying compressed gas to the gas turbine (60 or 120) during a second period of time to produce power, and heating means (56 or 106 and 58 or 108) for heating the gas supplied to the said turbine (60 or 120), characterised in that the said heating means comprises a solar collector (52 or 102) interposed between the storage reservoir (90 or 160) and the turbine (60 or 120), the solar collector having a surface which is movable so that it is exposed alternately, on the one hand, to solar radiation whereby the said surface is heated and, on the other hand, to the said gas which flows over the said surface and absorbs heat therefrom.

11. Apparatus according to claim 10 characterised by a heat exchanger (82 or 148) for cooling the gas compressed by the compressor means (80 or 140) before the gas is stored in the storage reservoir (90 or 160).

12. Apparatus according to claim 11 characterised in that the heat exchanger ( 82 or 148) is part of a waste heat converter (85 or 150) for producing electrical power.

13. Apparatus according to claim 12 characterised in that the waste heat converter (85 or 150) is an organic-fluid Rankine Cycle power plant (86 or 154), and the heat exchanger (82 or 148) is a vaporizer for vaporizing the organic working fluid of the organic-fluid Rankine cycle power plant (86 or 154).

14. Apparatus according to claim 13 characterised by a heat exchanger (62 or 122) for cooling gases exiting said gas turbine (60 or 120).

15. Apparatus according to claim 14 CHARACTERIZED IN THAT said heat exchanger (62 or 122) is part of a waste heat converter (65 or 125) for producing electrical power.

16. Apparatus according to claim 15 CHARACTERIZED IN THAT said waste heat converter (65 or 125) is an organic-fluid Rankine cycle power plant (66 or 123), and said heat exchanger (62 or 122) is a vaporizer for vaporizing the organic working fluid of the Rankine cycle power plant (66 or 123).

17. Apparatus according to claim 10 CHARACTERIZED IN THAT said first period of time is during periods of off-peak demand for electricity.

18. Apparatus according to claim 17 CHARACTERIZED IN THAT said first period of time is during the night and said second period of time is during the day.

19. Apparatus according to claim 18 CHARACTERIZED IN THE PROVISION OF a heat exchanger (82 or 148) for cooling the compressed gas.

20. Apparatus according to claim 19 CHARACTERIZED IN THAT said heat exchanger (82 or 148) is part of a waste heat converter (85 or 150) for producing electrical power.

21. Apparatus according to claim 20 CHARACTERIZED IN THAT said waste heat converter (85 or 150) is an organic-fluid Rankine cycle power plant (86 or 154), and said heat exchanger (82 or 148) is a vaporizer for vaporizing the organic working fluid of the Rankine cycle power plant (86 or 154).

22. Apparatus according to claim 10 CHARACTERIZED IN THAT said solar collector (82 or 102) includes a receiver (86 or 106), positioned at the top of a tower, for receiving the compressed gas, and tracking reflectors (54 or 104) for focusing solar radiation on said receiver (56 or 106) and heating the gas therein.

23. Apparatus according to claim 22 CHARACTERIZED IN THAT said means (56 or 106 and 58 or 108) for heating the gas further comprises a combustion chamber (58 or 108) for heating gas supplied to the gas turbine (60 or 120).

24. Apparatus according to claim 23 CHARACTERIZED IN THAT the solar radiation receiver (56 or 106) and combustion chamber (58 or 108) are arranged such that the gas flowing to said gas turbine (60 or 120) first passes through the solar receiver (56 or 106) and then said combustion chamber (58 or 108).

25. Apparatus according to claim 23 CHARACTERIZED IN THAT said combustion chamber (58A) is upstream of the solar collector (56A).

26. Apparatus according to claim 10 CHARACTERIZED IN THAT said solar collector (200) comprises a rotatable ceramic member (210) for transferring heat from solar radiation to the gas.

27. Apparatus according to claim 10 CHARACTERIZED IN THE PROVISION OF an electric motor (70 or 130) for driving said compressor (80 or 140).

28. Apparatus according to claim 27 CHARACTERIZED IN THAT said electric motor (70 or 130) operates as an electric generator when driven by the gas turbine (60 or 120) during the second period of time.

29. Apparatus according to claim 10 CHARACTERIZED IN THAT said gas turbine (60 or 120) is a multi-stage turbine (120a, 120b).

30. Apparatus according to claim 10 CHARACTERIZED IN THAT said gas is air.

31. Apparatus according to claim 22 CHARACTERIZED IN THE PROVISION OF a sensing/control unit (59 or 118) responsive to the temperature of the gas exiting the solar receiver (56 or 106) for effecting operation of the combustion chamber (58 or 108) when the temperature of the gas falls below a predetermined value.

32. Apparatus according to claim 29 CHARACTERIZED IN THAT said gas turbine is a multi-stage turbine (120) having a high pressure stage (120a) and a low pressure stage (120b).

33. Apparatus according to claim 32 CHARACTERIZED IN THE PROVISION OF a second solar collector (110) and second combustion chamber (116) for heating gas exiting said high pressure stage (120a) prior to entering said low pressure stage (120b) of multi-stage turbine (120).

34. Apparatus according to claim 33 CHARACTERIZED IN THAT the second solar collector (110) comprises a receiver (114), positioned at the top of a tower, for receiving gases form the high-pressure stage (120b) of the turbine (120), and tracking reflectors (112) focus solar radiation on said receiver (114) for heating the gas therein.

35. Apparatus according to claim 10 CHARACTERIZED IN THAT said means for heating the gas includes an external combustion chamber operating on low grade fuel.

36. Apparatus according to claim 10 CHARACTERISED BY heat storage means for storing heat extracted from the gas compressed by the compressor means (80) for later use.

37. A method according to claim 9 CHARACTERIZED IN THAT the work extracted from gases exhausted from the turbine (60 or 120) is produced by transferring heat present in the exhaust gases to another fluid in a heat exchanger (62 or 122).

38. A method according to claim 37 CHARACTERIZED BY producing electricity using heat transferred to the other fluid in the heat exchanger (62 or 122), wherein the heat exchanger is part of a waste heat converter (65 or 125).

39. A method according to claim 38 CHARACTERIZED IN THAT the heat supplied to the other fluid vaporizes the fluid producing vapors that are supplied to a turbine contained in the waste heat converter (62 or 125) to produce electricity, the waste heat converter being an organic fluid Rankine cycle power plant (66 or 123).

## Patentansprüche

1. Verfahren zur Stromerzeugung durch Komprimieren von Gas von einer Umgebungsquelle während einer ersten Zeitperiode, Speichern des komprimierten Gases in einem Speicherungsbehälter (90 oder 160), und Weiterleiten des komprimierten Gases von dem Speicherungsbehälter (90 oder 160) nach einer Gasturbine (60 oder 120) während einer zweiten Zeitperiode, um elektrischen Strom zu erzeugen, dadurch gekennzeichnet, daß das Gas durch einen Solarkollektor (52 oder 102) hindurchgeleitet wird, bevor es der Turbine (60 oder 120) zugeführt wird, wobei der Solarkollektor eine bewegliche Oberfläche hat, die abwechselnd einerseits der Sonnenstrahlung ausgesetzt wird, wodurch die Oberfläche erhitzt wird, und andererseits dem Gas ausgesetzt wird, das über die Oberfläche strömt und dabei Wärme absorbiert.

2. Verfahren gemäß Anspruch 1, dadurch gekennzeichnet, daß das der Gasturbine (60 oder 120) zugeführte, komprimierte Gas in einer Verbrennungskammer (58 oder 108), in der Brennstoff verbrannt wird, erhitzt wird.

3. Verfahren gemäß Anspruch 1 oder 2, dadurch gekennzeichnet, daß das komprimierte Gas gekühlt wird, bevor es gespeichert wird, wozu die in dem komprimierten Gas enthaltene Wärme in einem Wärmeaustauscher (82 oder 148) auf ein anderes Fluid übertragen wird.

4. Verfahren gemäß Anspruch 3, dadurch gekennzeichnet, daß elektrischer Strom erzeugt wird unter Verwendung der in dem Wärmeaustauscher (82 oder 148) auf das andere Fluid übertragenen Wärme, wobei der Wärmeaustauscher ein Bestandteil eines Abwärmeumwandlers (85 oder 150) ist.

5. Verfahren gemäß Anspruch 4, dadurch gekennzeichnet, daß die dem anderen Fluid zugeführte Wärme das Fluid verdampft, und dabei die Dämpfe einer in dem Abwärmeumwandler (85 oder 150) enthaltenen Turbine zugeführt werden, um elektrischen Strom zu erzeugen, wobei der Abwärmeumwandler ein nach dem Clausius-Rankine-Prozeß mit einem organischen Fluid arbeitendes Kraftwerk (86 oder 154) ist.

6. Verfahren gemäß irgendeinem der Ansprüche 1 bis 5, dadurch gekennzeichnet, daß der Solarkollektor einen auf einem Turm angeordneten Sammelbehälter (56 oder 106) umfaßt, um das komprimierte Gas aufzunehmen, und nachgeführte Reflektoren (54 oder 104) umfaßt, um die Sonnenstrahlung auf den Sammelbehälter (56 oder 106) zu fokussieren und das darin enthaltene Gas zu erhitzten.

7. Verfahren gemäß irgendeinem der Ansprüche 1 bis 6, dadurch gekennzeichnet, daß das Gas unter Verwendung einer Verbrennungskammer (58 oder 108) erhitzt wird, bevor es der Turbine (60 oder 120) zugeführt wird.

8. Verfahren gemäß Anspruch 7, dadurch gekennzeichnet, daß die Verbrennungskammer (58 oder 108) in Betrieb gesetzt wird, wenn ein Abfall der Temperatur des aus dem Solar-Sammelbehälter (56 oder 106) ausströmenden Gases unter einen vorgegebenen Wert gefühlt wird.

9. Verfahren gemäß irgendeinem der Ansprüche 1 bis 8, dadurch gekennzeichnet, daß aus den aus der Turbine (60 oder 120) ausströmenden Gasen (bei 66 oder 125) Energie gewonnen wird.

10. Vorrichtung zur Stromerzeugung unter Verwendung von komprimiertem Gas und einer Gasturbine (60 oder 120) zum Antreiben eines elektrischen Generators (70 oder 130), mit Kompressormitteln (80 oder 140), um das Gas wahrend einer ersten Zeitperiode zu komprimieren; einem Speicherungsbehälter (90 oder 160), um das durch die Kompressormittel (80 oder 140) komprimierte Gas zu speichern: und Mitteln, um das komprimierte Gas während einer zweiten Zeitperiode der Gasturbine (60 oder 120) zuzuführen zur Stromerzeugung, und Erhitzungsmitteln (56 oder 106 und 58 oder 108), um das der Turbine (60 oder 120) zugeführte Gas zu erhitzen, dadurch gekennzeichnet, daß die Erhitzungsmittel einen Solarkollektor (52 oder 102) aufweisen, der zwischen dem Speicherungsbehälter (90 oder 160) und der Turbine (60 oder 120) angeordnet ist, wobei der Solarkollektor eine Oberfläche hat, die beweglich ist, so daß sie abwechselnd einerseits der Sonnenstrahlung ausgesetzt wird, wodurch die Oberfläche erhitzt wird, und andererseits dem Gas ausgesetzt wird, das über die Oberfläche strömt und dabei Wärme absorbiert.

11. Vorrichtung gemäß Anspruch 10, gekennzeichnet durch einen Wärmeaustauscher (82 oder 148), um das durch die Kompressormittel (80 oder 140) komprimierte Gas zu kühlen, bevor es in dem Spelcherungsbehälter (90 oder 160) gespeichert wird.

12. Vorrichtung gemäß Anspruch 11, dadurch gekennzeichnet, daß der Wärmeaustauscher (82 oder 148) ein Bestandteil eines Abwärmeumwandlers (85 oder 150) zur Erzeugung von elektrischem Strom ist.

13. Vorrichtung gemäß Anspruch 12, dadurch gekennzeichnet, daß der Abwärmeumwandler (85 oder 150) ein nach dem Clausius-Rankine-Prozeß mit einem organischen Fluid arbeitendes Kraftwerk (86 oder 154) ist, und der Wärmeaustauscher (82 oder 148) ein Verdampfer zum Verdampfen des organischen Arbeitsfluids des nach dem Clausius-Rankine-Prozeß mit einem organischen Fluid arbeitenden Kraftwerks (86 oder 154) ist.

14. Vorrichtung gemäß Anspruch 13, gekennzeichnet durch einen Wärmeaustauscher (62 oder 122) zum Kühlen der aus der Gasturbine (60 oder 120) ausströmenden Gase.

15. Vorrichtung gemäß Anspruch 14, dadurch gekennzeichnet, daß der Wärmeaustauscher (62 oder 122) ein Bestandteil eines Abwärmeumwandlers (65 oder 125) zur Erzeugung von elektrischem Strom ist.

16. Vorrichtung gemäß Anspruch 15, dadurch gekennzeichnet, daß der Abwärmeumwandler (65 oder 125) ein nach dem Clausius-Rankine-Prozeß mit einem organischen Fluid arbeitendes Kraftwerk (66 oder 123) ist, und der Wärmeaustauscher (62 oder 122) ein Verdampfer zum Verdampfen des organischen Arbeitsfluids des nach dem Clausius-Rankine-Prozeß arbeitenden Kraftwerks (66 oder 123) ist.

17. Vorrichtung gemäß Anspruch 10, dadurch gekennzeichnet, daß die erste Zeitperiode während der Perioden ohne Strom-Spitzenbedarf liegt.

18. Vorrichtung gemäß Anspruch 17, dadurch gekennzeichnet, daß die erste Zeitperiode während der Nacht liegt, und die zweite Zeitperiode während des Tages liegt.

19. Vorrichtung gemäß Anspruch 18, dadurch gekennzeichnet, daß ein Wärmeaustauscher (82 oder 148) zum Kühlen des komprimierten Gases vorgesehen ist.

20. Vorrichtung gemäß Anspruch 19, dadurch gekennzeichnet, daß der Wärmeaustauscher (82 oder 148) ein Bestandteil eines Abwärmeumwandlers (85 oder 150) zur Erzeugung von elektrischem Strom ist.

21. Vorrichtung gemäß Anspruch 20, dadurch gekennzeichnet, daß der Abwärmeumwandler (85 oder 150) ein nach dem Clausius-Rankine-Prozeß mit einem organischen Fluid arbeitendes Kraftwerk (86 oder 154) ist, und der Wärmeaustauscher (82 oder 148) ein Verdampfer zum Verdampfen des organischen Arbeitsfluids des nach dem Clausius-Rankine-Prozeß arbeitenden Kraftwerks (86 oder 154) ist.

22. Vorrichtung gemäß Anspruch 10, dadurch gekennzeichnet, daß der Solarkollektor (82 oder 102) einen auf einem Turm angeordneten Sammelbehälter (86 oder 106) umfaßt, um das komprimierte Gas aufzunehmen, und nachgeführte Reflektoren (54 oder 104) umfaßt, um die Sonnenstrahlung auf den Sammelbehälter (56 oder 106) zu fokussieren und das darin enthaltene Gas zu erhitzen.

23. Vorrichtung gemäß Anspruch 22, dadurch gekennzeichnet, daß die Mittel (56 oder 106, und 58 oder 108) zum Erhitzen des Gases weiterhin eine Verbrennungskammer (58 oder 108) zum Erhitzen des der Gasturbine (60 oder 120) zugeführten Gases aufweisen.

24. Vorrichtung gemäß Anspruch 23, dadurch gekennzeichnet, daß der Solar-Sammelbehälter (56 oder 106) und die Verbrennungskammer (58 oder 108) so angeordnet sind, daß das nach der Gasturbine (60 oder 120) strömende Gas zunächst durch den Solar-Sammelbehälter (56 oder 106), und dann durch die Verbrennungskammer (58 oder 108) strömt.

25. Vorrichtung gemäß Anspruch 23, dadurch gekennzeichnet, daß die Verbrennungskammer (58A) stromaufwärts von dem Solarkollektor (56A) angeordnet ist.

26. Vorrichtung gemäß Anspruch 10, dadurch gekennzeichnet, daß der Solarkollektor (200) ein drehbares keramisches Element (210) aufweist, um Wärme von der Sonnenstrahlung auf das Gas zu übertragen.

27. Vorrichtung gemäß Anspruch 10, dadurch gekennzeichnet, daß ein Elektromotor (70 oder 130) zum Antreiben des Kompressors (80 oder 140) vorgesehen ist.

28. Vorrichtung gemäß Anspruch 27, dadurch gekennzeichnet, daß der Elektromotor (70 oder 130) als elektrischer Generator wirkt, wenn er während der zweiten Zeitperiode von der Gasturbine (60 oder 120) angetrieben wird.

29. Vorrichtung gemäß Anspruch 10, dadurch gekennzeichnet, daß die Gasturbine (60 oder 120) eine mehrstufige Turbine (120a, 120b) ist.

30. Vorrichtung gemäß Anspruch 10, dadurch gekennzeichnet, daß das Gas Luft ist.

31. Vorrichtung gemäß Anspruch 22, dadurch gekennzeichnet, daß eine auf die Temperatur des aus dem Solar-Sammelbehälter (56 oder 106) ausströmenden Gases ansprechende Fühl/Steuer-Einheit (59 oder 118) vorgesehen ist, um die Verbrennungskammer (58 oder 108) in Betrieb zu setzen, wenn die Temperatur des Gases unter einen vorgegebenen Wert abfällt.

32. Vorrichtung gemäß Anspruch 29, dadurch gekennzeichnet, daß die Gasturbine eine mehrstufige Turbine (120) ist, die eine Hochdruckstufe (120a) und eine Niederdruckstufe (120b) hat.

33. Vorrichtung gemäß Anspruch 32, dadurch gekennzeichnet, daß ein zweiter Solarkollektor (110) und eine zweite Verbrennungskammer (116) vorgesehen sind, um das aus der Hochdruckstufe (120a) ausströmende Gas zu erhitzen, bevor es in die Niederdruckstufe (120b) der mehrstufigen Turbine (120) einströmt.

34. Vorrichtung gemäß Anspruch 33, dadurch gekennzeichnet, daß der zweite Solarkollektor (110) einen auf einem Turm angeordneten Sammelbehälter (114) aufweist, um Gase von der Hochdruckstufe (120b) der Turbine (120) aufzunehmen, und nachgeführte Reflektoren (112) die Sonnenstrahlung auf den Sammelbehälter (114) fokussieren, um das darin enthaltene Gas zu erhitzen.

35. Vorrichtung gemäß Anspruch 10, dadurch gekennzeichnet, daß die Mittel zum Erhitzen des Gases eine externe Verbrennungskammer umfassen, die mit geringwertigem Brennstoff arbeitet.

36. Vorrichtung gemäß Anspruch 10, gekennzeichnet durch Wärmespeicherungsmittel zur Speicherung der Wärme, die aus dem durch die Kompressormittel (80) komprimierten Gas gewonnen wird, zwecks späterer Verwendung.

37. Verfahren gemäß Anspruch 9, dadurch gekennzeichnet, daß die Energie, die aus den aus der Turbine (60 oder 120) ausströmenden Gasen gewonnen wird, durch Übertragen der in den ausströmenden Gasen enthaltenen Wärme in einem Wärmeaustauscher (62 oder 122) auf ein anderes Fluid erzeugt wird.

38. Verfahren gemäß Anspruch 37, dadurch gekennzeichnet, daß elektrischer Strom unter Verwendung der in dem Wärmeaustauscher (62 oder 122) auf das andere Fluid übertragenen Wärme erzeugt wird, wobei der Wärmeaustauscher ein Bestandteil eines Abwärmeumwandlers (65 oder 125) ist.

39. Verfahren gemäß Anspruch 38, dadurch gekennzeichnet, daß die dem anderen Fluid zugeführte Wärme das Fluid verdampft, wobei Dämpfe erzeugt werden, die einer in dem Abwärmeumwandler (62 oder 125) enthaltenen Turbine zugeführt werden, um elektrischen Strom zu erzeugen, wobei der Abwärmeumwandler ein nach dem Clausius-Rankine-Prozeß mit einem organischen Fluid arbeitendes Kraftwerk (66 oder 123) ist.

## Revendications

1. Procédé de production d'énergie par compression de gaz provenant d'une source ambiante au cours d'une première période de temps, stockage du gaz comprimé dans un réservoir de stockage (90 ou 160) et amenée du gaz comprimé du réservoir de stockage (90 ou 160) à une turbine à gaz (60 ou 120) au cours d'une deuxième période de temps, pour produire de l'énergie électrique, caractérisé en ce que le gaz traverse un collecteur solaire (52 ou 102) avant son amenée à la turbine (60 ou 120), le collecteur solaire comportant une surface mobile exposée alternativement, d'une part au rayonnement solaire entraînant le chauffage de ladite surface, et d'autre part audit gaz traversant ladite surface et en absorbant de la chaleur.

2. Procédé selon la revendication 1, caractérisé en ce que le gaz comprimé fourni à la turbine à gaz (60 ou 120) est chauffé dans une chambre de combustion (58 ou 108) dans laquelle du carburant est brûlé.

3. Procédé selon les revendications 1 ou 2, caractérisé par le refroidissement du gaz comprimé, avant son stockage, par transfert de chaleur contenue dans le gaz comprimé à un autre fluide dans un échangeur de chaleur (82 ou 148).

4. Procédé selon la revendication 3, caractérisé par la production d'énergie électrique par l'intermédiaire de chaleur transférée à l'autre fluide dans l'échangeur de chaleur (82 ou 148), l'échangeur de chaleur faisant partie d'un convertisseur de chaleur perdue (85 ou 150).

5. Procédé selon la revendication 4, caractérisé en ce que la chaleur fournie à l'autre fluide entraîne l'évaporation du fluide, les vapeurs étant amenées vers une turbine contenue dans le convertisseur de chaleur perdue (85 ou 150) pour produire de l'énergie électrique, le convertisseur de chaleur perdue étant une centrale électrique à cycle de Rankine à fluide organique (86 ou 154).

6. Procédé selon l'une quelconque des revendications 1 à 5, caractérisé en ce que le collecteur solaire englobe un capteur (56 ou 106), positionné en haut d'une tour, pour capter le gaz comprimé, et des réflecteurs de guidage (54 ou 104) pour focaliser le rayonnement solaire sur le capteur (56 ou 106), pour chauffer le gaz qui y est contenu.

7. Procédé selon l'une quelconque des revendications 1 à 6, caractérisé par le chauffage du gaz avant son amenée à la turbine (60 ou 120) par l'intermédiaire d'une chambre de combustion (58 ou 108).

8. Procédé selon la revendication 7, caractérisé par le démarrage du fonctionnement de la chambre de combustion (58 ou 108) en réponse à la détection d'une chute de la température du gaz sortant du capteur solaire (56 ou 106) au-dessous d'une valeur prédéterminée.

9. Procédé selon l'une quelconque des revendications 1 à 8, caractérisé par l'extraction du travail (au niveau de la référence 66 ou 125) des gaz d'échappement de la turbine (60 ou 120).

10. Appareil pour la production d'énergie utilisant du gaz comprimé et une turbine à gaz (60 ou 120) en vue de l'entraînement d'un générateur (70 ou 130), comprenant un moyen compresseur (80 ou 140) pour comprimer le gaz au cours d'une première période de temps: un réservoir de stockage (90 ou 160) pour stocker le gaz comprimé par ledit moyen compresseur (80 ou 140): et un moyen pour amener le gaz comprimé à la turbine à gaz (60 ou 120) au cours d'une deuxième période de temps, pour produire de l'énergie, ainsi qu'un moyen de chauffage (56 ou 106 et 58 ou 108) pour chauffer le gaz amené à ladite turbine (60 ou 120), caractérisé en ce que ledit moyen de chauffage comprend un collecteur solaire (52 ou 102) agencé entre le réservoir de stockage (90 ou 160) et la turbine (60 ou 120), le collecteur solaire ayant une surface mobile, de sorte qu'il est exposé alternativement, d'un côté au rayonnement solaire, ladite surface étant ainsi chauffée, et d'un autre côté audit gaz traversant ladite surface et en absorbant la chaleur.

11. Appareil selon la revendication 10, caractérisé par un échangeur de chaleur (82 ou 148) pour refroidir le gaz comprimé par le moyen compresseur (80 ou 140) avant le stockage du gaz dans le réservoir de stockage (90 ou 160).

12. Appareil selon la revendication 11, caractérisé en ce que l'échangeur de chaleur (82 ou 148) fait partie d'un convertisseur de chaleur perdue (85 ou 150) pour produire de l'énergie électrique.

13. Appareil selon la revendication 12, caractérisé en ce que le convertisseur de chaleur perdue (85 ou 150) est une centrale électrique à cycle de Rankine à fluide organique (86 ou 154), l'échangeur de chaleur (82 ou 148) étant un vaporisateur pour faire évaporer le fluide organique moteur de la centrale électrique à cycle de Rankine à fluide organique (86 ou 154).

14. Appareil selon la revendication 13, caractérisé par un échangeur de chaleur (62 ou 122) pour refroidir les gaz sortant de ladite turbine à gaz (60 ou 120).

15. Appareil selon la revendication 14, caractérisé en ce que ledit échangeur de chaleur (62 ou 122) fait partie d'un convertisseur de chaleur perdue (65 ou 125) pour produire de l'énergie électrique.

16. Appareil selon la revendication 15, caractérisé en ce que ledit convertisseur de chaleur perdue (65 ou 125) est une centrale électrique à cycle de Rankine à fluide organique (66 ou 123), et en ce que ledit échangeur de chaleur (62 ou 122) est un vaporisateur pour faire évaporer le fluide organique moteur de la centrale électrique à cycle de Rankine (66 ou 123).

17. Appareil selon la revendication 10, caractérisé en ce que ladite première période de temps correspond aux périodes hors pointe de la demande d'électricité.

18. Appareil selon la revendication 17, caractérise en ce que ladite première période de temps se situe pendant la nuit, ladite deuxième période de temps se situant pendant le jour.

19. Appareil selon la revendication 18, caractérisé par l'agencement d'un échangeur de chaleur (82 ou 148) pour le refroidissement du gaz comprimé.

20. Appareil selon la revendication 19, caractérisé en ce que ledit échangeur de chaleur (82 ou 148) fait partie d'un convertisseur de chaleur perdue (85 ou 150) pour produire de l'énergie électrique.

21. Appareil selon la revendication 20, caractérisé en ce que ledit convertisseur de chaleur perdue (85 ou 150) est une centrale électrique à cycle de Rankine à fluide organique (86 ou 154), et en ce que ledit échangeur de chaleur (82 ou 148) est un vaporisateur pour faire évaporer le fluide organique moteur de la centrale électrique à cycle de Rankine (86 ou 154).

22. Appareil selon la revendication 10, caractérisé en ce que ledit collecteur solaire (82 ou 102) englobe un capteur (86 ou 106), positionné en haut d'une tour pour capter le gaz comprimé, et des réflecteurs de guidage (54 ou 104) pour focaliser le rayonnement solaire sur ledit capteur (56 ou 106) et pour chauffer le gaz qui y est contenu.

23. Appareil selon la revendication 22, caractérisé en ce que ledit moyen (56 ou 106 et 58 ou 108) pour chauffer le gaz comprend en outre une chambre de combustion (58 ou 108) pour chauffer le gaz amené à la turbine à gaz (60 ou 120).

24. Appareil selon la revendication 23, caractérisé en ce que le capteur du rayonnement solaire (56 ou 106) et la chambre de combustion (58 ou 108) sont agencés de sorte que le gaz s'écoulant vers ladite turbine à gaz (60 ou 120) traverse d'abord le capteur solaire (56 ou 106) et ensuite ladite chambre de combustion (58 ou 108).

25. Appareil selon la revendication 23, caractérisé en ce que ladite chambre de combustion (58A) se trouve en amont du collecteur solaire (56A).

26. Appareil selon la revendication 10, caractérisé en ce que ledit collecteur solaire (200) comprend un élément céramique rotatif (210) pour transférer la chaleur du rayonnement solaire au gaz.

27. Appareil selon la revendication 10, caractérisé par l'agencement d'un moteur électrique (70 ou 130) pour entraîner ledit compresseur (80 ou 140).

28. Appareil selon la revendication 27, caractérisé en ce que ledit moteur électrique (70 ou 130) fonctionne comme un générateur électrique lorsqu'il est entrainé par la turbine à gaz (60 ou 120) au cours de la deuxième période de temps.

29. Appareil selon la revendication 10, caractérisé en ce que ladite turbine à gaz (60 ou 120) est une turbine à étages multiples (120a, 120b).

30. Appareil selon la revendication 10, caractérisé en ce que ledit gaz est de l'air.

31. Appareil selon la revendication 22, caractérisé par l'agencement d'une unité de détection/de commande (59 ou 118), réagissant à la température du gaz sortant du capteur solaire (56 ou 106) pour entraîner le fonctionnement de la chambre de combustion (58 ou 108) lorsque la température du gaz tombe au-dessous d'une valeur prédéterminée.

32. Appareil selon la revendication 29, caractérisé en ce que ladite turbine à gaz est une turbine à étages multiples (120) ayant un étage haute pression (120a) et un étage basse pression (120b).

33. Appareil selon la revendication 32, caractérisé par l'agencement d'un deuxième collecteur solaire (110) et d'une deuxième chambre de combustion (116) pour chauffer le gaz sortant dudit étage haute pression (120a) avant son entrée dans ledit étage basse pression (120a) de la turbine à étages multiples (120).

34. Appareil selon la revendication 33, caractérisé en ce que le deuxième collecteur solaire (110) comprend un capteur (114) positionné en haut d'une tour, pour capter les gaz provenant de l'étage haute pression (120b) de la turbine (120) et des réflecteurs de guidage (112) pour focaliser le rayonnement solaire sur ledit capteur (114), pour chauffer le gaz qui y est contenu.

35. Appareil selon la revendication 10, caractérisé en ce que ledit moyen pour chauffer le gaz englobe une chambre de combustion externe fonctionnant avec du combustible secondaire.

36. Appareil selon la revendication 10, caractérisé par un moyen de stockage de chaleur pour stocker la chaleur extraite du gaz comprimé par le moyen compresseur (80) en vue d'une utilisation ultérieure.

37. Procédé selon la revendication 9, caractérisé en ce que l'énergie extraite des gaz d'échappement de la turbine (60 ou 120) est produite par le transfert de la chaleur contenue dans les gaz d'échappement à un autre fluide dans un échangeur de chaleur (62 ou 122).

38. Procédé selon la revendication 37, caractérisé par la production d'électricité par l'intermédiaire de la chaleur transférée à l'autre fluide dans l'échangeur de chaleur (62 ou 122), l'échangeur de chaleur faisant partie d'un convertisseur de chaleur perdue (65 ou 125).

39. Procédé selon la revendication 38, caractérisé en ce que la chaleur fournie à l'autre fluide entraîne l'évaporation du fluide, avec production de vapeurs amenées à une turbine contenue dans le convertisseur de chaleur perdue (62 ou 125), pour produire de l'électricité, le convertisseur de chaleur perdue étant une centrale électrique à cycle de Rankine à fluide organique (66 ou 123).
